# EUROPEAN PATENT APPLICATION

(11) **EP 2 325 537 A2**
(43) Date of publication of application: **25.05.2011**
(21) Application number: 10163626.4
(22) Date of filing: 21.05.2010
(51) Int. Cl.: F16L 33/22

(54) **Hose coupling**

(30) Priority: 19.11.2009 TW 098139310
(71) Applicant: Liao, Yuan-Ching, Chiayi County, Taipei (TW)
(72) Inventor: Liao, Yuan-Ching, Chiayi County, Taipei (TW)
(74) Representative: Texier, Christian

(57) **Abstract**

A hose coupling includes a coupling component (3) and a sleeve unit (4). The coupling component (3) has an end portion (31) adapted to be coupled removably to a hose. The sleeve unit (4) includes a sleeve body (41), a surrounding ring (42), and an accessible anti-slip member (43) . The sleeve body (41) is adapted to be sleeved on the hose and the end portion (31), and is operable to permit removal of the hose. The surrounding ring (42) is sleeved co-movably on the sleeve body (41), and has inner and outer surrounding surfaces radially opposite to each other, and an engaging hole (423) extending radially through the inner and outer surrounding surfaces. The accessible anti-slip member (43) engages fixedly the engaging hole (423) of the surrounding ring (42).

## Description

The invention relates to a coupling, more particularly to a hose coupling.

In most gardening work, a hose coupling is provided to connect a hose and a faucet to spray water. However, the hose coupling generally gets wet during use, and tends to slip off from a user's hand. Therefore, referring to FIG. 1, a conventional anti-slip hose coupling 2 is disclosed in European Patent No.EP 0756127. The conventional hose coupling 2 comprises an anti-slip sleeve 21 having a main body 211 and an anti-slip member 212. The anti-slip member 212 is sleeved fixedly on an outer peripheral surface of the main body 211. However, since the main body 211 and the anti-slip member 212 are made of different materials having different hardness and are manufactured respectively by two injection molding machines (not shown), the manufacturing process of the conventional hose coupling 2 is troublesome. Moreover, there are only a limited number of combinations for the different materials of the main body 211 and the anti-slip member 212 that can be well bonded together when transforming from the molten state to the hardened state, thereby resulting in inconvenience during the manufacturing process.

Therefore, the object of the invention is to provide a hose coupling capable of alleviating the above drawbacks of the prior art.

Accordingly, a hose coupling of the present invention comprises a coupling component and a sleeve unit. The coupling component extends along an axis, and has an end portion adapted to be coupled removably to a hose. The sleeve unit includes a sleeve body, a surrounding ring, and an accessible anti-slip member. The sleeve body extends along the axis, is adapted to be sleeved on the hose and the end portion of the coupling component, and is operable to permit removal of the hose from the end portion of the coupling component. The surrounding ring is sleeved co-movably on the sleeve body, and has inner and outer surrounding surfaces radially opposite to each other, and a hole-defining surface interconnecting the inner and outer surrounding surfaces and defining an engaging hole. The accessible anti-slip member engages fixedly the engaging hole of the surrounding ring.

Other features and advantages of the invention will become apparent in the following detailed description of the preferred embodiments with reference to the accompanying drawings, of which:

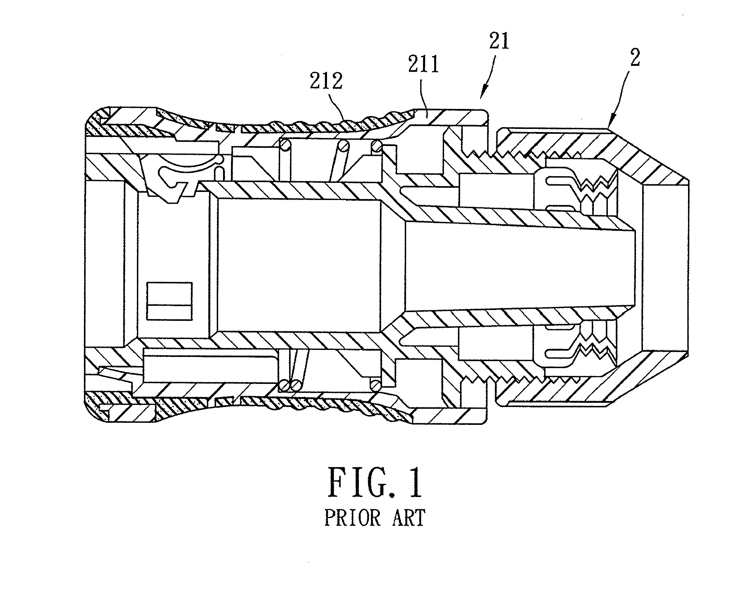

FIG. 1 is a sectional view of a conventional hose coupling disclosed in European Patent No. EP 0756127B1
FIG. 2 is an exploded perspective view of a hose coupling of a first preferred embodiment according to the present invention;
FIG. 3 is a partly sectional view of the first preferred embodiment in a longitudinal direction;
FIG. 4 is a fragmentary enlarged sectional view of Fig. 3;
FIG. 5 is another partly sectional view of the first preferred embodiment in a cross-sectional direction;
FIG. 6 is a schematic side view of a second preferred embodiment of the hose coupling according to the present invention; and
FIG. 7 is a schematic side view of a third preferred embodiment of the hose coupling according to the present invention.

Before the invention is described in greater detail with reference to the accompanying embodiments, it should be noted herein that like elements are denoted by the same reference numerals throughout the disclosure.

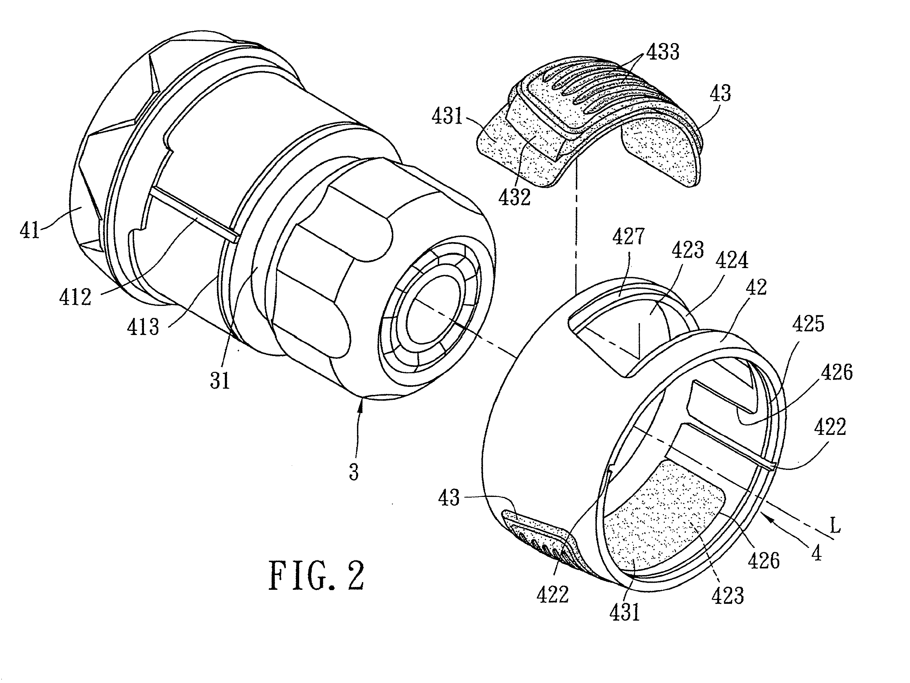

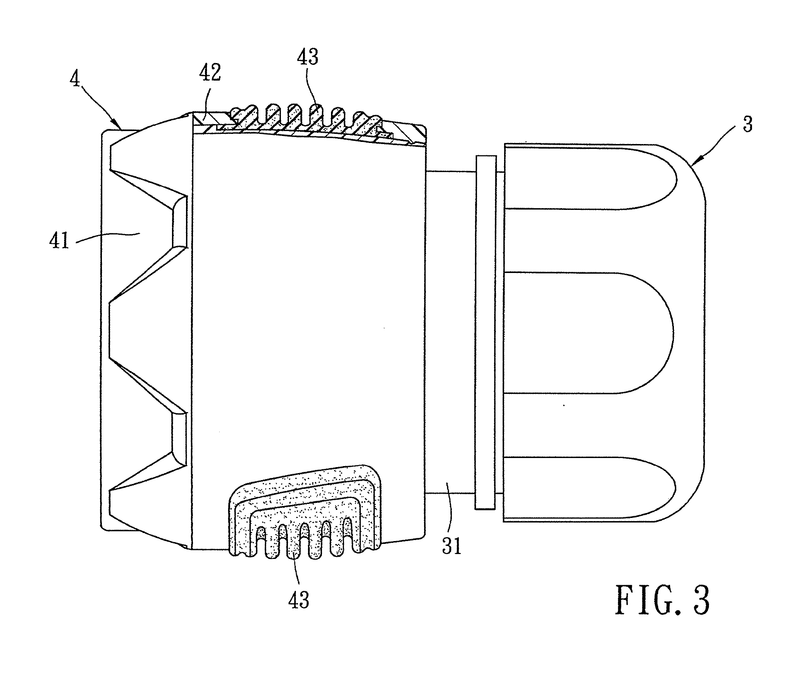

Referring to FIGS. 2 and 3, a first preferred embodiment of a hose coupling according to the present invention comprises a coupling component 3 and a sleeve unit 4. The coupling component 3 extends along an axis L , and has an end portion 31 adapted to be coupled removably to a hose (not shown).

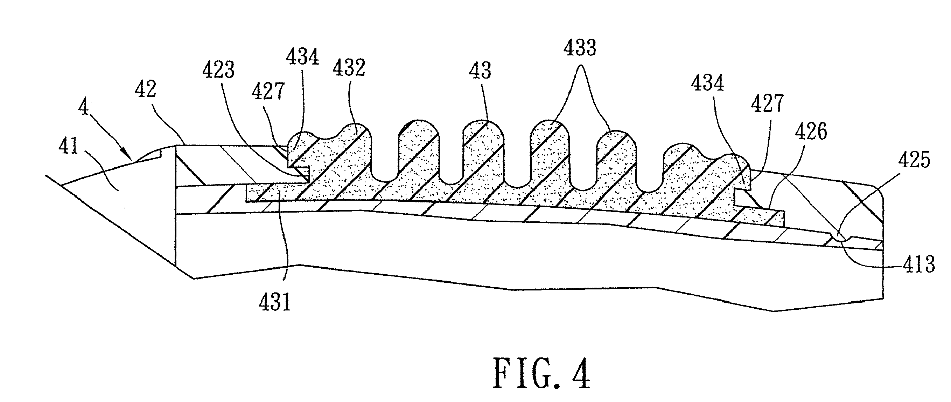

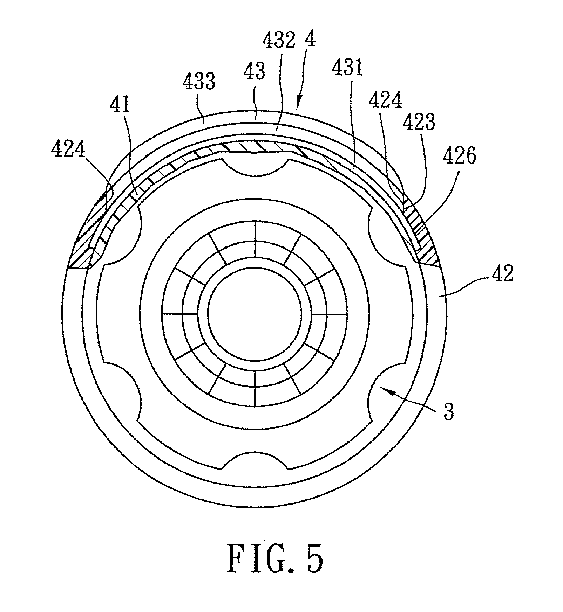

Further referring to FIGS. 4 and 5, the sleeve unit 4 includes a sleeve body 41, a surrounding ring 42, and two accessible anti-slip members 43. The sleeve body 41 extends along the axis L , is adapted to be sleeved on the hose and the end portion 31 of the coupling component 3, and is operable to permit removal of the hose from the end portion 31 of the coupling component 3.

The surrounding ring 42 is sleeved co-movably on the sleeve body 41, and has inner and outer surrounding surfaces radially opposite to each other. The inner surrounding surface of the surrounding ring 42 has a pair of diametrically opposite coupling grooves 422 that extend in an axial direction, and a positioning groove 425 that surrounds the axis L.

The sleeve body 41 of the sleeve unit 4 has a pair of diametrically opposite coupling rib parts 412 (only one is visible in FIG. 2) , each projecting from an outer surrounding surface of the sleeve body 41, extending in the axial direction, and engaging a respective one of the coupling grooves 422, thereby coupling non-rotatably the surrounding ring 42 to the sleeve body 41. The sleeve body 41 further has a positioning rib part 413 that projects from the outer surrounding surface of the sleeve body 41, that surrounds the axis (L), and that engages the positioning groove 425, thereby positioning the surrounding ring 42 relative to the sleeve body 41 along the axis L.

It should be noted that, the positions of the coupling rib parts 412 and the coupling grooves 422, and the positions of the positioning rib part 413 and the positioning groove 425 are both interchangeable in other embodiments of the invention.

In this embodiment, the surrounding ring 42 has two engaging holes 423. Each of the engaging holes 423 extends radially through the inner and outer surrounding surfaces of the surrounding ring 42. The surrounding ring 42 further has a pair of hole-defining surfaces 424 (see FIG. 5). Each of the hole-defining surfaces 424 interconnects the inner and outer surrounding surfaces of the surrounding ring 42, defines a respective one of the engaging holes 423, and has a converging portion that extends in the axial direction and that converges radially and outwardly from the inner surrounding surface toward the outer surrounding surface of the surrounding ring 42.

Each of the anti-slip members 43 of the surrounding ring 42 engages fixedly a respective one of the engaging holes 423 of the surrounding ring 42, and has an engaging portion 431, an abutment portion 432, and a plurality of anti-slip protrusions 433. The engaging portion 431 of each of the anti-slip members 43 has a peripheral part coupled to the inner surrounding surface of the surrounding ring 42. The abutment portion 432 of each of the anti-slip members 43 protrudes radially and outwardly from the engaging portion 431 of a respective one of the anti-slip members 43, and is retained fittingly within a respective one of the engaging holes 423. Each of the abutment portions 432 has a portion tapering radially and outwardly from the engaging portion 431 of the corresponding one of the anti-slip members 43 so as to abut against the converging portion of a respective one of the hole-defining surfaces 424. Inthispreferredembodiment, the anti-slip protrusions 433 of each of the anti-slip members 43 are configured as a plurality of ribs and project radially and outwardly from the abutment portion 432 of a respective one of the anti-slip members 43.

The surrounding ring 42 further has a pair of internal engaging grooves 426, and a pair of external engaging grooves 427 (see FIG. 4). Each of the internal engaging grooves 426 is formed in the inner surrounding surface of the surrounding ring 42, extends through a securing portion of a respective one of the hole-defining surfaces 424, and is in spatial communication with the corresponding engaging hole 423. The peripheral part of the engaging portion 431 of each of the anti-slip members 43 engages a respective one of the inner engaging grooves 426.

Each of the external engaging grooves 427 is formed in the outer surrounding surface of the surrounding ring 42, extends through the securing portion of a respective one of the hole-defining surfaces 424, and is in spatial communication with the corresponding engaging hole 423. Each of the anti-slip members 43 further has a clamping portion 434 that projects from the abutment portion 432 of a corresponding one of the anti-slip members 43, that is radially spaced apart from the peripheral part of the corresponding engaging portion 431, and that engages a respective one of the external engaging grooves 427. The engagement between the clamping portions 434 and the external engaging grooves 427, as well as the engagement between the engaging portions 431 and the engaging grooves 426, further enhance the engaging strength between the anti-slip members 43 and the surrounding ring 42. It should be noted that the anti-slip members 43 may be made of rubber or silica gel, and the anti-slip protrusions 433 may be omitted in other embodiments of the invention.

To sum up, the advantages of the hose coupling according to the present invention are as follows. In the present invention, the anti-slip protrusions 433 of each of the anti-slip members 43 provide an anti-slip function when the user holds the hose coupling during use. Moreover, the anti-slip members 43 can be easily made without considering if they are able to be well bonded to the surrounding ring 42, thereby alleviating the drawbacks of the prior art.

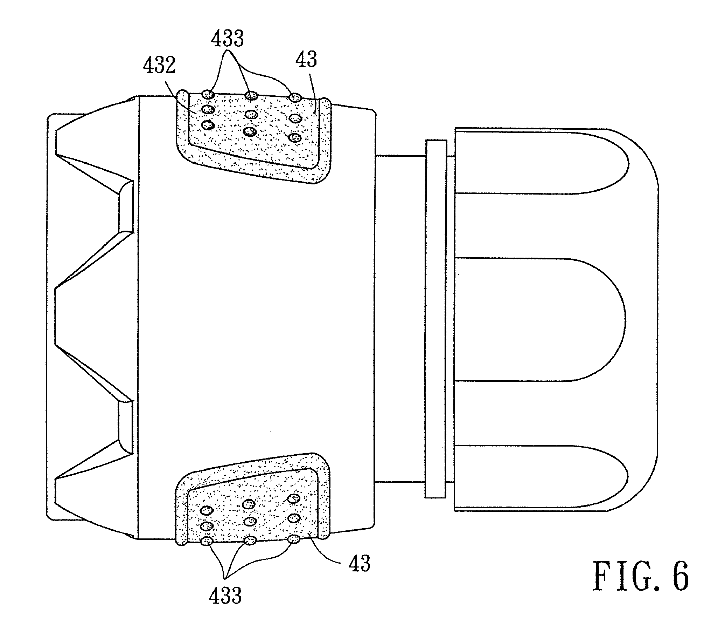

As shown in FIG. 6, a second preferred embodiment of the hose coupling according to the present invention has a structure similar to that of the first embodiment. The main difference between this embodiment and the first embodiment resides in the configuration of the anti-slip members 43. In this embodiment, the anti-slip protrusions 433 of each of the anti-slip members 43 are configured as a plurality of round protrusions formed on the abutment portion 432 of a respective one of the anti-slip members 43. The second preferred embodiment has the same advantages as those of the first preferred embodiment.

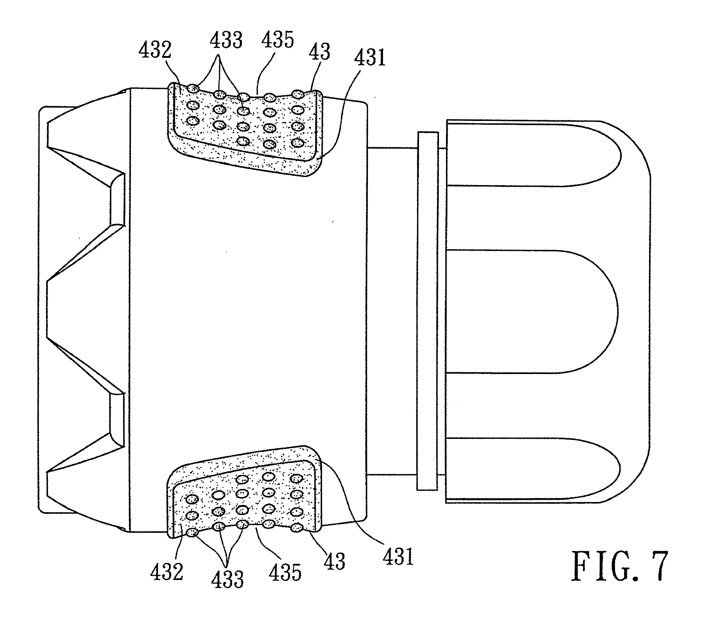

Referring to FIG. 7, a third preferred embodiment of the hose coupling according to the present invention has a structure similar to that of the first embodiment. The main difference between this embodiment and the first embodiment resides in the following. In this embodiment, each of the anti-slip members 43 has an outer surface that is radially distant from the engaging portion 431 of the corresponding anti-slip member 43 and that is formed with an accessible recess 435. The anti-slip protrusions 433 of each of the anti-slip members 43 are disposed in a respective one of the accessible recesses 435 and project radially and outwardly from the outer surface of the abutment portion 432. The third preferred embodiment has the same advantages as those of the first preferred embodiment.

## Claims

1. A hose coupling **characterized by**:
a coupling component (3) extending along an axis (L), and having an end portion (31) that is adapted to be coupled removably to a hose; and
a sleeve unit (4) including
a sleeve body (41) that extends along the axis (L) , that is adapted to be sleeved on the hose and said end portion (31) of said coupling component (3), and that is operable to permit removal of the hose from said end portion (31) of said coupling component (3),
a surrounding ring (42) that is sleeved co-movably on said sleeve body (41) , and that has inner and outer surrounding surfaces radially opposite to each other, and a hole-defining surface (424) interconnecting said inner and outer surrounding surfaces and defining an engaging hole (423), and
an accessible anti-slipmember (43) that engages fixedly said engaging hole (423) of said surrounding ring (42).

2. The hose coupling according to claim 1, **characterized in that** said anti-slip member (43) has:
an engaging portion (431) having a peripheral part that is coupled to said inner surrounding surface of said surrounding ring (42); and
an abutment portion (432) protruding radially and outwardly from said engaging portion (431), and retained fittingly within said engaging hole (423).

3. The hose coupling according to claim 2, further **characterized in that**:
said hole-defining surface (424) has a converging portion that converges radially and outwardly from said inner surrounding surface toward said outer surrounding surface of said surrounding ring (42); and
said abutment portion (432) of said anti-slip member (43) has a portion tapering radially and outwardly from said engaging portion (431) so as to abut against said convergingportion of saidhole-defining surface (424).

4. The hose coupling according to any one of claims 2 and 3, further **characterized in that**:
said hole-defining surface (424) has a securing portion;
said surrounding ring (42) further has an internal engaging groove (426) that is formed in said inner surrounding surface of said surrounding ring (42) , that extends through said securing portion of said hole-defining surface (424), and that is in spatial communication with said engaging hole (423), and an external engaging groove (427) that is formed in said outer surrounding surface of said surrounding ring (42), that extends through said securing portion of said
hole-defining surface (424), and that is in spatial communication with said engaging hole (423);
said peripheral part of said engaging portion (431) of said anti-slip member (43) engages said inner engaging groove (426); and
said anti-slip member (43) further has a clamping portion (434) that projects from said abutment portion (432) of said anti-slip member (43), that is radially spaced apart from said peripheral part of said engaging portion (431), and that engages said external engaging groove (427).

5. The hose coupling according to any one of claims 2 to 4, further **characterized in that** said anti-slip member (43) further has a plurality of anti-slip protrusions (433) projecting radially and outwardly from said abutment portion (432) of said anti-slip member (43).

6. The hose coupling according to any one of claims 2 to 4, further **characterized in that** said abutment portion (432) of said anti-slipmember (43) has an outer surface that is radially distant from said engaging portion (431) of said anti-slip member (43) and that is formed with an accessible recess (435).

7. The hose coupling according to claim 6, further **characterized in that** said anti-slip member (43) further has a plurality of anti-slip protrusions (433) disposed in said accessible recess (435) and projecting radially and outwardly from said outer surface of said abutment portion (432).

8. The hose coupling according to any one of claims 1 to 7, **characterized in that**:
said inner surrounding surface of said surrounding ring (42) further has a coupling groove (422) that extends in an axial direction; and
said sleeve body (41) of said sleeve unit (4) has a coupling rib part (412) that projects from an outer surrounding surface of said sleeve body (41), that extends in the axial direction, and that engages said coupling groove (422), thereby coupling non-rotatably said surrounding ring (42) to said sleeve body (41).

9. The hose coupling according to claim 8, further **characterized in that**:
said inner surrounding surface of said surrounding ring (42) further has a positioning groove (425) that surrounds the axis (L); and
saidsleevebody (41) of said sleeve unit (4) further has a positioning rib part (413) that projects from said outer surrounding surface of said sleeve body (41), that surrounds the axis (L), and that engages said
positioning groove (425), thereby positioning said surrounding ring (42) relative to said sleeve body (41) along the axis (L).
